(19) **Europäisches Patentamt**
**European Patent Office**
**Office européen des brevets**

(11) **EP 3 273 408 B1**

(12) **EUROPEAN PATENT SPECIFICATION**

(45) Date of publication and mention
of the grant of the patent:
**09.09.2020  Bulletin 2020/37**

(51) Int Cl.:
***G06T 7/50*** *(2017.01)*

(21) Application number: **16465520.1**

(22) Date of filing: **19.07.2016**

(54) **DEVICE AND METHOD FOR DETERMINING A DISTANCE TO A VEHICLE**

VORRICHTUNG UND VERFAHREN ZUR BESTIMMUNG EINER DISTANZ ZU EINEM FAHRZEUG

SYSTÈME ET PROCÉDÉ POUR MESURER UNE DISTANCE PAR RAPPORT À UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.01.2018  Bulletin 2018/04**

(73) Proprietor: **Continental Automotive GmbH
30165 Hannover (DE)**

(72) Inventor: **Pahontu, Nicolae
405100 Campia Turzii (RO)**

(74) Representative: **Bobbert, Christiana
Conti Temic microelectronic GmbH
Patente & Lizenzen
Sieboldstrasse 19
90411 Nürnberg (DE)**

(56) References cited:
**EP-A1- 3 035 315          JP-A- H1 096 626
US-A- 5 867 256            US-A1- 2009 240 432
US-A1- 2016 150 070**

EP 3 273 408 B1

**Description**

The invention relates to a device and a method for determining a distance to a vehicle. In particular, the invention relates to a device for determining a distance to a neighboring vehicle for use in an ego-vehicle. The invention further relates to a driver assistance system and a vehicle.

Modern driver assistance systems can assist the driver by performing certain driving functions or can autonomously drive the vehicle without the need of any further interventions by the driver. In order to perform driving functions, a detailed and precise knowledge of the surrounding of the vehicle is required. For this purpose, modern vehicles comprise a plurality of sensors which can measure the distance from the vehicle to other objects within its surrounding.

Radar sensors provide a good accuracy for measuring the distance of objects up to several hundred meters. However, the angular resolution of radar sensors is usually not very high. In order to obtain a good angular localization, multiple antennas are needed which raises the costs of such a sensor system.

As an alternative, stereo cameras allow a calculation of the distance based on a triangulation method. Such cameras are usually rather expensive and require high computing power.

Laser sensors or Lidar sensors, such as the device known from document US 5266955 A, measure the time of flight of the emitted laser light in order to determine the distance of objects. The accuracy of these sensors is usually rather restricted.

In document EP3035315A1 an information retrieval arrangement for a host vehicle is provided. The arrangement is configured to retrieve information of at least one surrounding vehicle, surrounding the host vehicle.

Correspondingly, there is a need to measure distances at good precision with reasonable demands on costs and computing power. In particular, there is a need for a setup to measure distances which can be realized by simple hardware components.

The present invention provides a device for determining a distance to a vehicle with the features as recited in claim 1. The invention further provides a driver assistance system with the features as recited in claim 5, a vehicle with the features as recited in claim 6, and a method for determining a distance to a vehicle with the features as recited in claim 7.

According to a first aspect, a device for determining a distance to a vehicle is provided, which comprises a sensor unit that is adapted to capture a camera image of the vehicle. The device further comprises a recognizing unit which is adapted to recognize an identification tag of the vehicle, and an information-obtaining unit which is adapted to obtain vehicle information about the vehicle from a database, based on the recognized identification tag of the vehicle. The vehicle information comprises a dimension of the vehicle. The device further comprises a distance-determining unit which is adapted to determine a current distance to the vehicle, based on the dimension of the vehicle comprised in the vehicle information and on a vehicle image dimension of the vehicle within the captured camera image.

Preferably, the identification tag of the vehicle can be a physical feature of the vehicle or information about the vehicle which allows an unambiguous identification of the vehicle. The database preferably comprises vehicle information of a large set of vehicles, for instance all vehicles registered in a certain city, region, country, continent, or of all vehicles registered world-wide. The dimension of the vehicle can include information about the size of the vehicle, for instance a width and/or a length and/or a height of the vehicle, but can also comprise a distance between certain well-defined elements or features of the vehicle, such as a distance between the stop lamps of the vehicle or a width and/or length of the license plate of the vehicle. The vehicle image dimension preferably refers to a size, preferably measured in pixels, of a region of the camera image of the vehicle which corresponds to the respective physical dimension of the vehicle.

According to a second aspect of the invention, a driver assistance system comprising a device for determining a distance to a vehicle is provided.

According to a third aspect, the invention provides a vehicle comprising a device for determining a distance to a neighboring vehicle.

According to a fourth aspect of the invention, a method for determining a distance to a vehicle is provided. A camera image of the vehicle is captured and an identification tag of the vehicle is recognized. Vehicle information about the vehicle is obtained from a database, based on the recognized identification tag of the vehicle. The vehicle information comprises a dimension of the vehicle. Further, a current distance to the vehicle is determined, based on the dimension of the vehicle comprised in the vehicle information and on a vehicle image dimension of the vehicle within the captured camera image.

The invention provides a reliable method for determining a distance to a vehicle with high precision. No additional hardware components are needed apart from those usually already present in modern vehicles. Therefore, the device and the method can be implemented in an easy and economical way. According to the invention, the device comprises a memory for storing the database. In this case, the device can be autonomously used without the need of a remote connection to the vehicle.

According to the invention, the device further comprises a remote interface which is adapted to receive and to store at least a subset of the database from a server via a remote connection. In this case, it is possible to update and modify the database in a central way at the server. The device has always access to the most recent and up-to-date vehicle information.

According to the invention, the remote interface is adapted to send GPS coordinates of the device to the server via the remote connection. The subset of the database depends on the GPS coordinates of the device. For instance, a traffic monitoring system can recognize the vehicles which are present in certain regions, sections of a road or areas. The traffic monitoring system may recognize the vehicles that pass a certain section of a road and may further store the moment in time when each vehicle passes this section. Preferably, the traffic monitoring system sends to the receiving device the identification tags of the vehicles that passed the section of the road and the corresponding moment in time when each vehicle passed the area. The recognizing unit is adapted to identify the vehicles based on the vehicle identification tags and the time of passing the area. In this way, the recognizing unit is able to increase the accuracy and to reduce the time needed for identification of the vehicles in the vicinity. Depending on the GPS coordinates, the device may only receive and store the vehicle information of vehicles which have been identified within the region around the device. Therefore, not the entire database has to be stored and less memory space is needed.

According to another embodiment of the device, the recognizing unit is adapted to recognize the identification tag of the vehicle on the basis of the camera image. Therefore, there is no need for any additional sensors.

According to a further embodiment of the device, the recognizing unit comprises a vehicle interface which is adapted to receive the identification tag from the vehicle via a remote connection. The vehicle interface can be part of a car-to-car communication. Since the vehicle identifies itself, there is no danger of misrecognition.

According to another embodiment of the invention, the vehicle information obtained by the information-obtaining unit further comprises a feature of the vehicle other than the dimension of the vehicle. The sensor unit is adapted to recognize the feature of the vehicle, and the device further comprises a check unit, which is adapted to verify the feature of the vehicle comprised in the vehicle information based on the feature of the vehicle recognized by the sensor unit. If the verification of the feature of the vehicle is positive, the check unit is further adapted to confirm the recognized identification tag of the vehicle. If the verification of the feature of the vehicle is negative, the check unit is further adapted to reject the recognized identification tag of the vehicle. In this case, the check unit controls the recognizing unit to recognize a new identification tag of the vehicle. This embodiment allows double-checking that the identification tag is correct, i.e., really corresponds to the vehicle. The feature of the vehicle can comprise for instance at least one of a color of the vehicle, a model of the vehicle, a brand of the vehicle, a presence of particular elements such as a third stop lamp, or the color or size of the license plate of the vehicle.

According to another embodiment of the method, the identification tag is given by a license plate number of the vehicle. This allows an easy and unique identification of the vehicle.

According to another embodiment of the method, the identification tag is recognized on the basis of the camera image.

According to a further embodiment of the method, the identification tag of the vehicle is obtained from the vehicle via a remote connection.

According to a further embodiment of the method, the vehicle information further comprises a feature of the vehicle other than the dimension of the vehicle. The feature of the vehicle is recognized and the feature of the vehicle comprised in the vehicle information is verified based on the recognized feature of the vehicle. If the verification of the feature of the vehicle is positive, the recognized identification tag of the vehicle is confirmed. If the verification of the feature of the vehicle is negative, the recognized identification tag of the vehicle is rejected and a new identification tag of the vehicle is recognized.

According to another preferred embodiment of the method, a comparison distance is determined based on a standard license plate size obtained from the database and on a license plate image size of the license plate within the captured camera image. The determined current distance is confirmed based on the comparison distance. The standard license plate size can be determined as the standard size of license plates within the country where the device is currently located, which can be determined based on GPS coordinates of the device. The determined current distance can be confirmed if a difference between the determined current distance and the comparison distance is smaller than a predetermined threshold value. Otherwise, the determined current distance can be rejected.

For a more complete understanding of the invention and the advantages thereof, exemplary embodiments of the invention are explained in more detail in the following description with reference to the accompanying drawing figures, in which like reference characters designate like parts and in which:

Fig. 1    shows a block diagram of a device for determining a distance to a vehicle according to a first embodiment of the invention;

Fig. 2    shows a block diagram of a device for determining a distance to a vehicle according to a second embodiment of the invention;

Fig. 3    shows a block diagram of a device for determining a distance to a vehicle according to a third embodiment of the invention;

Fig. 4    shows a schematic top view on an illustrative scenario for explaining the determination of the distance, and a corresponding camera image;

Fig. 5    shows a top view on an illustrative scenario for explaining the determination of the distance to a neighboring vehicle, which is driving in front of the ego-vehicle;

Fig. 6    shows a schematic top view on an illustrative scenario for explaining the determination of the distance to a neighboring vehicle, which is driving in parallel to the ego-vehicle;

Fig. 7    shows a block diagram of a driver assistance system according to an embodiment of the invention;

Fig. 8    shows a block diagram of a vehicle according to an embodiment of the invention; and

Fig. 9    shows a flowchart of a method for determining a distance to a vehicle according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will also be understood that the terms and expressions used in the present specification have the ordinary meaning as is accorded to such terms and expressions with respect to their corresponding respective areas of inquiry and study, except where specific meanings have otherwise been set forth herein.

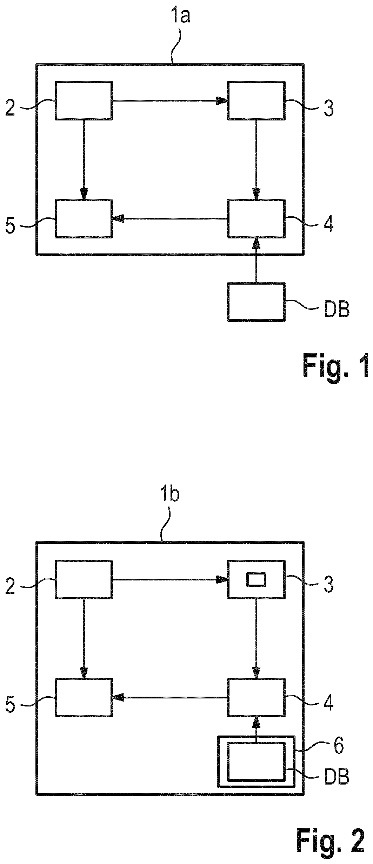

Figure 1 shows a block diagram of a device 1a for determining a distance to a vehicle according to a first embodiment of the invention.

Preferably, the device is adapted for use within an ego-vehicle for determining a distance to another neighboring vehicle. Further, the device can also be used for traffic control or monitoring systems.

A vehicle can comprise a motor vehicle such as a car, a truck, an aircraft, an eBike, a scooter, a motorcycle or a boat.

The device 1a comprises a sensor unit 2 which is adapted to capture a camera image of the vehicle. The sensor unit 2 can comprise one or more cameras, preferably a surround view system.

The device further comprises a recognizing unit 3 which is adapted to recognize an identification tag of the vehicle. According to a preferred embodiment, the identification tag is given by a license plate number of the vehicle. Preferably, the recognizing unit 3 is adapted to recognize the license plate number of the vehicle based on the camera image of the vehicle.

The device 1a further comprises an information-obtaining unit 4 which is adapted to obtain vehicle information about the vehicle from a database DB. The database DB may be part of the device 1a or may be an external database DB. The database DB preferably comprises a list of a large number of vehicles which preferably has the form of a hash table, wherein a key is given by the identification tag of the vehicles. For each identification tag, vehicle information of the corresponding vehicle is stored in the database DB. The information-obtaining unit 4 is adapted to obtain the vehicle information about the vehicle corresponding to the recognized identification tag of the vehicle.

The vehicle information comprises a dimension of the vehicle, which may comprise a width and/or a length and/or a height of the vehicle. The information of the vehicle can also comprise a distance between two elements of the vehicle, such as the two stop lights of the vehicle. The vehicle information can also comprise the size, i.e. the width and a length of the license plate of the vehicle.

Further, the device comprises a distance-determining unit 5, which is adapted to determine a current distance to the vehicle, based on the dimension of the vehicle comprised in the vehicle information and on a vehicle image dimension of the vehicle within the captured camera image.

According to an embodiment, a quotient of a vehicle image dimension of the vehicle and the dimension of the vehicle comprised in the vehicle information is computed. For instance, a width of a vehicle image of the vehicle within the captured camera image is divided by an actual physical width of the vehicle comprised in the vehicle information. The distance-determining unit 5 comprises a lookup table, which assigns a distance to the vehicle for a large number of quotients. The distance-determining unit 5 is then adapted to determine the distance to the vehicle using the lookup table and the quotient.

Figure 2 shows a block diagram of a device 1b for determining a distance to a vehicle according to a second embodiment of the invention. The device 1b additionally comprises a memory 6 for storing the database DB. Thus, the database DB is locally stored on the memory 6 of the device 1b.

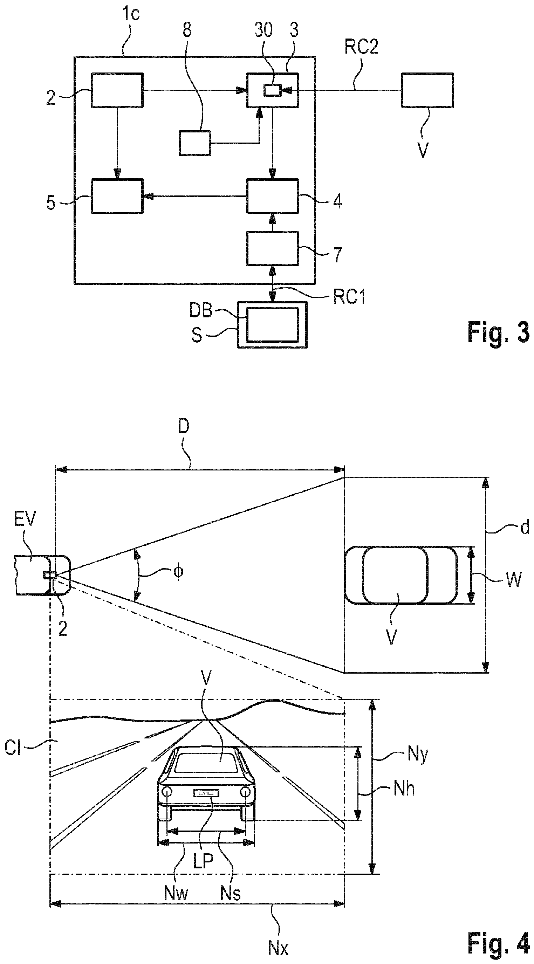

Fig. 3 shows a block diagram of a device 1c for determining a distance to a vehicle according to a third embodiment of the invention. The device 1c comprises a remote interface 7, which is adapted to receive and store at least a subset of the database DB from a server S via a first remote connection RC1. The device 1c and the server S can be part of a system.

The remote interface 7 can be adapted to send GPS coordinates of the device 1c to the server S via the first remote connection RC1. The database DB on the server S is classified and divided according to a number of spatial regions. For instance, a traffic monitoring system can identify the vehicles at certain locations of the road, for instance by their license plate, and can thus determine which vehicles are located within a given spatial region during a given time interval. Based on the GPS coordinates of the device, only the subset of the database corresponding to the spatial region around the device is received and stored via the remote interface 7.

According to another embodiment, the remote interface 7 is adapted to transmit the recognized identification tag to the server S, such that the database DB on the server S can be updated by adding the current position of the vehicle corresponding to the recognized identification tag. The current position can be part of the vehicle information of the vehicle.

The recognizing unit 3 of the device 1c further comprises a vehicle interface 30, which is adapted to receive the identification tag, preferably the license plate number, from the vehicle via a second remote connection RC2.

The vehicle information obtained by the information-obtaining unit 4 further comprises at least one additional feature of the vehicle other than the dimension of the vehicle. In particular, the additional feature can comprise a color of the vehicle, a brand of the vehicle or a distance between the stop lights of the vehicle. The sensor unit 2 is further adapted to measure or recognize the feature of the vehicle. The sensor unit 2 can comprise a plurality of further sensors for this task, such as radar sensors, lidar sensors, laser sensors, or additional cameras.

The device 1c further comprises a check unit 8 which is adapted to verify the feature of the vehicle comprised in the vehicle information based on the feature of the vehicle recognized by the sensor unit 2. For instance, the vehicle information corresponding to a recognized identification tag includes that the vehicle is of green color. With a camera of the sensor unit 2, the color of the vehicle can be recognized. The check unit 8 verifies whether the recognized color of the vehicle is green, i.e., is identical to the color comprised in the vehicle information. If this is the case, the verification is positive, i.e., the feature of the vehicle comprised in the vehicle information is identical to the feature of the vehicle recognized by the sensor unit 2. If the verification of the feature of the vehicle is positive, the check unit 8 is further adapted to confirm the recognized identification tag of the vehicle. A check unit 8 transmits a signal to the information-obtaining unit 4 to proceed further with obtaining the vehicle information.

If the verification of the feature of the vehicle is negative, i.e., the feature of the vehicle comprised in the vehicle information is not identical to the feature of the vehicle recognized by the sensor unit 2, the check unit 8 is further adapted to reject the recognized identification tag of the vehicle. In this case, the check unit 8 is adapted to control the recognizing unit 3 to recognize a new identification tag of the vehicle. This process is reiterated until the verification of the feature of the vehicle is positive. Only in this case, the information-obtaining unit 4 obtains the vehicle information about the vehicle from the database DB.

The upper part of Figure 4 shows a schematic top view on a scene comprising an ego-vehicle EV with a device for determining a distance to a vehicle V according to any of the previous embodiments, and a neighboring vehicle V (in the following simply denoted as "vehicle V"). The lower part of Figure 4 illustrates a schematic camera image CI of the vehicle V captured by the sensor unit 2 of the device of the ego-vehicle EV. The camera image CI comprises a vehicle image, i.e., an image of the vehicle V.

The sensor unit 2 comprises a vehicle camera with an opening angle $\phi$ (angle of view). The vehicle V is located at a distance D from the ego-vehicle EV. The area captured by the sensor unit 2 at the distance D has a horizontal extent d. In the camera image CI, the horizontal extent d corresponds to a width $N_x$ of the camera image CI, measured in pixels.

By observing a license plate LP of the vehicle V, the recognizing unit 3 is adapted to recognize a license plate number of the vehicle V. Based on the license plate number, the information-obtaining unit 4 obtains vehicle information about the vehicle V from the database, which comprises a width w of the vehicle V.

The distance-determining unit 5 is adapted to determine the vehicle image dimension of the vehicle V from the camera image (CI), which comprises a width $N_w$ of the vehicle image, which is measured in numbers of pixels. The distance-determining unit 5 is adapted to determine a current distance D of the vehicle V, based on the following formula:

$$D = Nx \cdot \frac{w}{2 \cdot Nw \cdot \tan(\phi/2)} \ .$$

This formula follows from the following geometric relation:

$$\frac{Nw}{Nx} = \frac{w}{d} = \frac{w}{2 \cdot D \cdot \tan(\phi/2)} \ .$$

As an example, the sensor unit 2 comprises a front view camera with an opening angle $\phi = 45°$ and a horizontal resolution or width Nx of the camera image given by Nx = 1920 pixels. The width w of the vehicle V comprised in the vehicle information obtained from the database DB is given by w = 1.8 m. The distance-determining unit 5 determines the width Nw of the vehicle image to be 200 pixels. The distance-determining unit 5 then determines the distance D of the vehicle V using the above formula as follows:

$$D = 1920 \cdot \frac{1.8 \, m}{2 \cdot 200 \cdot \tan(45/2)} = 20.8 \, m \ .$$

According to another embodiment, the distance-determining unit 5 has stored information about an optical distortion of the sensor unit 2. The distortion can be taken into account by a gradient formula grad($\alpha$), wherein $\alpha$ describes an angle of pixels from a center of the camera image CI, corresponding to an optical axis of the sensor unit 2. The angle $\alpha$ is increasing for pixels on the edge of the image sensor. The maximum value for the angle $\alpha$ is given by the opening angle $\phi$ of the sensor unit 2. In this case, the distance-determining unit 5 is adapted to determine the current distance D of the vehicle V by the following formula:

$$D = Nx \cdot \frac{w}{2 \cdot Nw \cdot \tan(\phi/2) \cdot \mathrm{grad}(\alpha)} \ .$$

The distance-determining unit 5 can also determine the current distance D of the vehicle V based on a distance Ns between stop lights within the vehicle image and an actual physical distance between the stop lights comprised in the vehicle information about the vehicle V. The distance-determining unit 5 can also determine the current distance D of the vehicle V based on a height Nh of the vehicle image, a height Ny of the camera image CI measured in pixels, and a physical height of the vehicle V comprised in the vehicle information about the vehicle V. The corresponding formulas are similar to the formulas above.

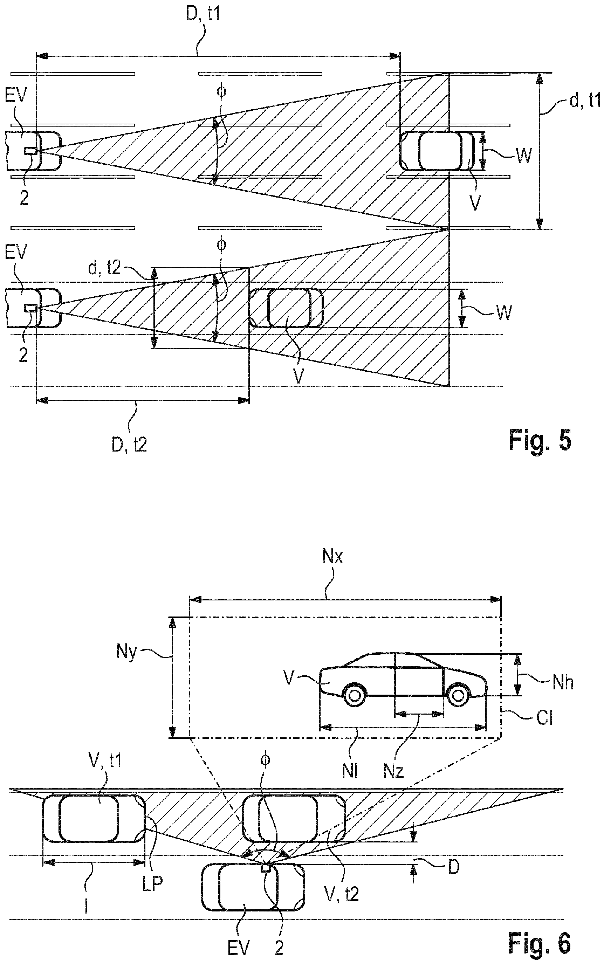

Figure 5 shows schematic top views on traffic scenario for illustrating the determination of the distance D. The upper part of Figure 5 shows a vehicle V at a distance D in front of an ego-vehicle EV at a first time t1. The lower part of Figure 5 shows the vehicle V at a distance D to the ego-vehicle EV at a second time t2. Preferably, the recognizing unit 3 recognizes the identification tag of the vehicle V only at the first time t1, wherein the distance-determining unit 5 is adapted to determine the current distance D of the vehicle V for an arbitrary number of different time points, in particular both at the first time t1 and at the second time t2. In particular, after an initial recognition of the vehicle V, the distance-determining unit 5 can continuously determine the current distance D to the vehicle V.

The lower part of Figure 6 shows a schematic top view on an illustrative traffic scenario showing an ego-vehicle EV comprising a device for determining a distance to a vehicle V according to any of the above embodiments. A vehicle V is driving on a traffic lane parallel to the ego-vehicle EV. The location of the vehicle V is illustrated at a first time t1 and at a second time t2. At the first time t1, a license plate LP of the vehicle V is visible to the sensor unit 2 of the ego-vehicle EV and the recognizing unit 3 identifies a license plate number from the license plate LP of the vehicle V. The information-obtaining unit 4 obtains vehicle information from the database DB based on the identified license plate number. At the second time t2, the distance to the vehicle V from the sensor unit 2 is determined by the distance-determining unit 5. The top part of Figure 6 shows a corresponding camera image CI of the vehicle V at the second time t2 comprising a vehicle image of the vehicle V. The distance-determining unit 5 can determine the current distance D of the vehicle V based on the relation of a length Nl of the vehicle image, measured in pixels, and a width Nx of the camera image CI. This ratio is compared to an actual length 1 of the vehicle V comprised in the vehicle information about the vehicle V. The distance-determining unit 5 determines the distance D based the formulas as above, using an opening angle $\phi$ of the sensor unit 2.

According to another embodiment, the distance-determining unit 5 can determine the distance D of the vehicle V based on a height Nh of the vehicle image, a height Ny of the camera image CI, and a physical height of the vehicle V comprised in the vehicle information about the vehicle V. The dimension of the vehicle can also be a physical width of a vehicle door of the vehicle V which is compared to a vehicle image width Nz of the vehicle door.

According to a further embodiment, the distance-determining unit 5 determines a comparison distance to the vehicle based on a standard license plate size obtained from the database DB and on a license plate image size of the license plate within the captured camera image CI. If a difference between the comparison distance to the vehicle and the determined current distance D to the vehicle V is below a predetermined value, the determined current distance D to the vehicle V is confirmed. Otherwise, the current distance D to the vehicle V is rejected and a new determination is performed.

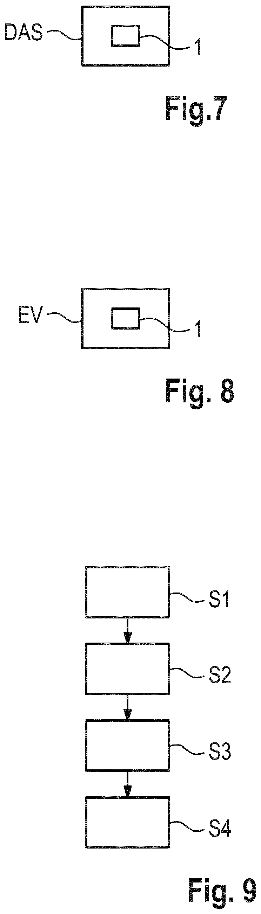

Figure 7 shows a block diagram of a driver assistance system DAS comprising a device 1 for determining a distance D to a vehicle V according to any of the previous embodiments.

Figure 8 shows a block diagram of an ego-vehicle EV comprising a device 1 for determining a distance to a neighboring vehicle V according to any of the previous embodiments.

Figure 9 shows a flowchart of a method for determining a distance D to a vehicle V. In a first method step S1, a camera image CI of the vehicle V is captured. In a second step S2, an identification tag of the vehicle V is recognized, and in a third step S3, vehicle information about the vehicle V is obtained from a database DB, based on the recognized identification tag of the vehicle V. The vehicle information comprises a dimension of the vehicle V. Further, in a step S4, a current distance to the vehicle V is determined based on the dimension of the vehicle V comprised in the vehicle information and on a vehicle image dimension of the vehicle V within the captured camera image CI.

Preferably, the identification tag is given by a license plate number of the vehicle V.

The identification tag is preferably recognized on the basis of the camera image CI.

The identification tag of the vehicle V is obtained from the vehicle V via a remote connection RC2.

According to a preferred embodiment, the vehicle information further comprises a feature of the vehicle V other than the dimension of the vehicle V. The feature of the vehicle V is recognized, and the feature of the vehicle V comprised in the vehicle information is verified based on the recognized feature of the vehicle V. If the verification of the feature of the vehicle V is positive, a recognized identification tag of the vehicle V is confirmed. In contrast, if the verification of the feature of the vehicle V is negative, the recognized identification tag of the vehicle V is rejected and a new identification tag of the vehicle V is recognized.

According to an embodiment, a comparison distance is determined based on a standard license plate size obtained from the database DB and on a license plate image size of the license plate within the captured camera image CI.

The method can comprise any of the further step described above for the device.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

REFERENCE SIGNS

| 1a | device for determining a distance to a vehicle |
| 1b | device for determining a distance to a vehicle |
| 1c | device for determining a distance to a vehicle |
| 2 | sensor unit |
| 3 | recognizing unit |
| 4 | information-obtaining unit |

| 5 | distance-determining unit |
|---|---|
| 6 | memory |
| 7 | remote interface |
| 8 | check unit |
| CI | camera image |
| d | horizontal extent |
| D | distance to the vehicle |
| DB | database |
| EV | ego-vehicle |
| Nw | width of the vehicle image |
| Nh | height of the vehicle image |
| Ns | distance between stop lights within the vehicle image |
| Nx | width of the camera image |
| Ny | height of the camera image |
| RC1 | first remote connection |
| RC2 | second remote connection |
| S | server |
| t1 | first time |
| t2 | second time |
| V | vehicle |
| w | width of the vehicle |
| $\phi$ | opening angle |

**Claims**

1. A device (1; 1a; 1b; 1c) for determining a distance (D) to a vehicle (V), comprising:

   a sensor unit (2), adapted to capture a camera image (CI) of the vehicle (V);
   a recognizing unit (3), adapted to recognizing an identification tag of the vehicle (V);
   an information-obtaining unit (4), adapted to obtain vehicle information about the vehicle (V) from a database (DB), based on the recognized identification tag of the vehicle (V), wherein the vehicle information comprises a dimension of the vehicle (V);
   a distance-determining unit (5), adapted to determine a current distance (D) to the vehicle (V), based on the dimension of the vehicle (V) comprised in the vehicle information and on a vehicle image dimension of the vehicle (V) within the captured camera image (CI);
   a memory (6) for storing the database (DB); and
   a remote interface (7), adapted to receive and store at least a subset of the database (DB) from a server (S) via a remote connection (RC1), wherein the remote interface (7) is adapted to send GPS coordinates of the device (1; 1a; 1b; 1c) to the server (S) via the remote connection (RC1), and wherein the subset of the database depends on the GPS coordinates of the device (1; 1a; 1b; 1c).

2. The device (1; 1a; 1b; 1c) according to the preceding claim, wherein the recognizing unit (3) is adapted to recognize the identification tag on the basis of the camera image (CI).

3. The device (1; 1c) according to any of the preceding claims, wherein the recognizing unit (3) comprises a vehicle interface (30), adapted to receive the identification tag from the vehicle (V) via a remote connection (RC2).

4. The device (1; 1c) according to any of the preceding claims, wherein:

   the vehicle information obtained by the information-obtaining unit (4) further comprises a feature of the vehicle (V) other than the dimension of the vehicle (V);
   the sensor unit (2) is adapted to recognize the feature of the vehicle (V);
   the device (1; 1c) further comprises a check unit (8), adapted to verify the feature of the vehicle (V) comprised in the vehicle information based on the feature of the vehicle (V) recognized by the sensor unit (2);
   if the verification of the feature of the vehicle (V) is positive, the check unit (8) is further adapted to confirm the recognized identification tag of the vehicle (V); and
   if the verification of the feature of the vehicle (V) is negative, the check unit (8) is further adapted to reject the recognized identification tag of the vehicle (V) and to control the recognizing unit (3) to recognize a new identification tag of the vehicle (V).

5. A driver assistance system (DAS) comprising a device (1; 1a; 1b; 1c) for determining a distance (D) to a vehicle (V) according to any of claims 1 to 4.

6. A vehicle (EV) comprising a device (1; 1a; 1b; 1c) for determining a distance (D) to a neighboring vehicle (V) according to any of claims 1 to 4.

7. A method for determining a distance (D) from a device (1; 1a; 1b; 1c) to a vehicle (V), comprising the steps:

capturing (S1) a camera image (CI) of the vehicle (V) by a sensor unit (2) comprised in the device (1; 1a; 1b; 1c);
recognizing (S2) an identification tag of the vehicle (V);
obtaining (S3) vehicle information about the vehicle (V) from a database, based on the recognized identification tag of the vehicle (V), wherein the vehicle information comprises a dimension of the vehicle (V); and
determining (S4) a current distance (D) to the vehicle (V), based on the dimension of the vehicle (V) comprised in the vehicle information and on a vehicle image dimension of the vehicle (V) within the captured camera image (CI), wherein the database (DB) is stored in a memory (6); and
wherein a remote interface (7) receives and stores at least a subset of the database (DB) from a server (S) via a remote connection (RC1), and wherein the remote interface (7) sends GPS coordinates of the device (1; la; 1b; 1c) to the server (S) via the remote connection (RC1), and wherein the subset of the database depends on the GPS coordinates of the device (1; la; 1b; 1c).

8. The method according to claim 7, wherein the identification tag is given by a license plate number of the vehicle (V).

9. The method according to claim 7 or 8, wherein the identification tag of the vehicle (V) is recognized on the basis of the camera image (CI).

10. The method according to any of claims 7 to 9, wherein the identification tag of the vehicle (V) is obtained from the vehicle (V) via a remote connection (RC2).

11. The method according to any of claims 7 to 10, wherein the vehicle information further comprises a feature of the vehicle (V) other than the dimension of the vehicle (V), the method further comprising the following steps:

recognizing the feature of the vehicle (V); and
verifying the feature of the vehicle (V) comprised in the vehicle information based on the recognized feature of the vehicle (V);
wherein, if the verification of the feature of the vehicle is positive, the recognized identification tag of the vehicle (V) is confirmed; and
wherein, if the verification of the feature of the vehicle is negative, the recognized identification tag of the vehicle (V) is rejected and a new identification tag of the vehicle (V) is recognized.

12. The method according to any of claims 7 to 11, wherein a comparison distance is determined based on a standard license plate size obtained from the database (DB) and on a license plate image size of the license plate (LP) within the captured camera image (CI), and wherein the determined current distance (D) is confirmed based on the comparison distance.

**Patentansprüche**

1. Vorrichtung (1; 1a; 1b; 1c) zum Bestimmen eines Abstands (D) zu einem Fahrzeug (V), umfassend:

eine Sensoreinheit (2), die dazu ausgelegt ist, ein Kamerabild (CI) des Fahrzeugs (V) aufzunehmen;
eine Erkennungseinheit (3), die dazu ausgelegt ist, eine Identifikationskennzeichnung des Fahrzeugs (V) zu erkennen;
eine Informationsbeschaffungseinheit (4), die dazu ausgelegt ist, basierend auf der erkannten Identifikationskennzeichnung des Fahrzeugs (V) Fahrzeuginformationen über das Fahrzeug (V) aus einer Datenbank (DB) zu beschaffen, wobei die Fahrzeuginformationen eine Abmessung des Fahrzeugs (V) umfassen;

eine Abstandsbestimmungseinheit (5), die dazu ausgelegt ist, basierend auf der Abmessung des Fahrzeugs (V), die in den Fahrzeuginformationen enthalten ist, und auf einer Fahrzeugbildabmessung des Fahrzeugs (V) innerhalb des aufgenommenen Kamerabildes (CI) einen aktuellen Abstand (D) zu dem Fahrzeug (V) zu bestimmen; einen Speicher (6) zum Speichern der Datenbank (DB); und

eine entfernt befindliche Schnittstelle (7), die dazu ausgelegt ist, wenigstens eine Teilmenge der Datenbank (DB) über eine Fernverbindung (RC1) von einem Server (S) zu empfangen und zu speichern, wobei die entfernt befindliche Schnittstelle (7) dazu ausgelegt ist, GPS-Koordinaten der Vorrichtung (1; 1a; 1b; 1c) über die Fernverbindung (RC1) an den Server (S) zu senden, und wobei die Teilmenge der Datenbank von den GPS-Koordinaten der Vorrichtung (1; 1a; 1b; 1c) abhängt.

2. Vorrichtung (1; 1a; 1b; 1c) nach dem vorherigen Anspruch, wobei die Erkennungseinheit (3) dazu ausgelegt ist, die Identifikationskennzeichnung auf der Grundlage des Kamerabildes (CI) zu erkennen.

3. Vorrichtung (1; 1c) nach einem der vorangehenden Ansprüche, wobei die Erkennungseinheit (3) eine Fahrzeugschnittstelle (30) umfasst, die dazu ausgelegt ist, die Identifikationskennzeichnung über eine Fernverbindung (RC2) von dem Fahrzeug (V) zu empfangen.

4. Vorrichtung (1; 1c) nach einem der vorangehenden Ansprüche, wobei:

die Fahrzeuginformationen, die durch die Informationsbeschaffungseinheit (4) beschafft werden, ferner ein Merkmal des Fahrzeugs (V) umfassen, bei dem es sich nicht um die Abmessung des Fahrzeugs (V) handelt; die Sensoreinheit (2) dazu ausgelegt ist, das Merkmal des Fahrzeugs (V) zu erkennen; die Vorrichtung (1; 1c) ferner eine Prüfeinheit (8) umfasst, die dazu ausgelegt ist, das Merkmal des Fahrzeugs (V), das in den Fahrzeuginformationen enthalten ist,

basierend auf dem Merkmal des Fahrzeugs (V), das durch die Sensoreinheit (2) erkannt wird, zu verifizieren; wenn die Verifizierung des Merkmals des Fahrzeugs (V) positiv ausfällt, die Prüfeinheit (8) ferner dazu ausgelegt ist, die erkannte Identifikationskennzeichnung des Fahrzeugs (V) zu bestätigen; und wenn die Verifizierung des Merkmals des Fahrzeugs (V) negativ ausfällt, die Prüfeinheit (8) ferner dazu ausgelegt ist, die erkannte Identifikationskennzeichnung des Fahrzeugs (V) abzulehnen und die Erkennungseinheit (3) dazu zu steuern, eine neue Identifikationskennzeichnung des Fahrzeugs (V) zu erkennen.

5. Fahrerassistenzsystem (DAS), das eine Vorrichtung (1; 1a; 1b; 1c) zum Bestimmen eines Abstands (D) zu einem Fahrzeug (V) nach einem der Ansprüche 1 bis 4 umfasst.

6. Fahrzeug (EV), das eine Vorrichtung (1; 1a; 1b; 1c) zum Bestimmen eines Abstands (D) zu einem benachbarten Fahrzeug (V) nach einem der Ansprüche 1 bis 4 umfasst.

7. Verfahren zum Bestimmen eines Abstands (D) von einer Vorrichtung (1; 1a; 1b; 1c) zu einem Fahrzeug (V), das folgende Schritte umfasst:

Aufnehmen (S1) eines Kamerabildes (CI) des Fahrzeugs (V) durch eine Sensoreinheit (2), die in der Vorrichtung (1; 1a; 1b; 1c) inbegriffen ist; Erkennen (S2) einer Identifikationskennzeichnung des Fahrzeugs (V); Beschaffen (S3) von Fahrzeuginformationen über das Fahrzeug (V) aus einer Datenbank basierend auf der erkannten Identifikationskennzeichnung des Fahrzeugs (V), wobei die Fahrzeuginformationen eine Abmessung des Fahrzeugs (V) umfassen; und Bestimmen (S4) eines aktuellen Abstands (D) zu dem Fahrzeug (V) basierend auf der Abmessung des Fahrzeugs (V), die in den Fahrzeuginformationen enthalten ist, und auf einer Fahrzeugbildabmessung des Fahrzeugs (V) innerhalb des aufgenommenen Kamerabildes (CI), wobei die Datenbank (DB) in einem Speicher (6) gespeichert ist; und wobei eine entfernt befindliche Schnittstelle (7) wenigstens eine Teilmenge der Datenbank (DB) über eine Fernverbindung (RC1) von einem Server (S) empfängt und speichert und wobei die entfernt befindliche Schnittstelle (7) GPS-Koordinaten der Vorrichtung (1; 1a; 1b; 1c) über die Fernverbindung (RC1) an den Server (S) sendet und wobei die Teilmenge der Datenbank von den GPS-Koordinaten der Vorrichtung (1; 1a; 1b; 1c) abhängt.

8. Verfahren nach Anspruch 7, wobei die Identifikationskennzeichnung durch eine Kennzeichenschildnummer des Fahrzeugs (V) gegeben ist.

9. Verfahren nach Anspruch 7 oder 8, wobei die Identifikationskennzeichnung des Fahrzeugs (V) auf der Grundlage des Kamerabildes (CI) erkannt wird.

10. Verfahren nach einem der Ansprüche 7 bis 9, wobei die Identifikationskennzeichnung des Fahrzeugs (V) über eine Fernverbindung (RC2) von dem Fahrzeug (V) beschafft wird.

11. Verfahren nach einem der Ansprüche 7 bis 10, wobei die Fahrzeuginformationen ferner ein Merkmale des Fahrzeugs (V) umfassen, bei dem es sich nicht um die Abmessung des Fahrzeugs (V) handelt, wobei das Verfahren ferner folgende Schritte umfasst:

Erkennen des Merkmals des Fahrzeugs (V); und
Verifizieren des Merkmals des Fahrzeugs (V), das in den Fahrzeuginformationen enthalten ist, basierend auf dem erkannten Merkmal des Fahrzeugs (V);
wobei, wenn die Verifizierung des Merkmals des Fahrzeugs (V) positiv ausfällt, die erkannte Identifikationskennzeichnung des Fahrzeugs (V) bestätigt wird; und
wobei, wenn die Verifizierung des Merkmals des Fahrzeugs negativ ausfällt, die erkannte Identifikationskennzeichnung des Fahrzeugs (V) abgelehnt wird und eine neue Identifikationskennzeichnung des Fahrzeugs (V) erkannt wird.

12. Verfahren nach einem der Ansprüche 7 bis 11, wobei basierend auf einer Standard-Kennzeichenschildgröße, die aus der Datenbank (DB) beschafft wird, und auf einer Kennzeichenschildbildgröße des Kennzeichenschildes (LP) innerhalb des aufgenommenen Kamerabildes (CI) ein Vergleichsabstand bestimmt wird und wobei der bestimmte aktuelle Abstand (D) basierend auf dem Vergleichsabstand bestätigt wird.

## Revendications

1. Dispositif (1 ; 1a ; 1b ; 1c) pour déterminer une distance (D) à un véhicule (V), comprenant :

une unité de capteur (2), conçue pour capturer une image de caméra (CI) du véhicule (V) ;
une unité de reconnaissance (3), conçue pour reconnaître une marque d'identification du véhicule (V) ;
une unité d'obtention d'informations (4), conçue pour obtenir des informations de véhicule sur le véhicule (V) d'une base de données (DB), basé sur la marque d'identification du véhicule (V) reconnue, les informations de véhicule comprenant une dimension du véhicule (V) ;
une unité de détermination de distance (5), conçue pour déterminer une distance actuelle (D) au véhicule (V), basé sur les dimensions du véhicule (V) comprises dans les informations de véhicule et sur les dimensions de l'image de véhicule du véhicule (V) dans l'image de caméra capturée (CI) ;
une mémoire (6) pour stocker la base de données (DB) ; et
une interface distante (7), conçue pour recevoir et stocker au moins un sous-ensemble de la base de données (DB) d'un serveur (S) via une connexion à distance (RC1), l'interface distante (7) étant conçue pour envoyer des coordonnées GPS du dispositif (1 ; la ; 1b ; 1c) au serveur (S) via la connexion à distance (RC1), et le sous-ensemble de la base de données dépendant des coordonnées GPS du dispositif (1 ; la ; 1b ; 1c).

2. Dispositif (1 ; la ; 1b ; 1c) selon les revendications précédentes, l'unité de reconnaissance (3) étant conçue pour reconnaître la marque d'identification basé sur l'image de caméra (CI).

3. Dispositif (1 ; 1c) selon l'une quelconque des revendications précédentes, l'unité de reconnaissance (3) comprenant une interface de véhicule (30), conçue pour recevoir la marque d'identification du véhicule (V) via une connexion à distance (RC2).

4. Dispositif (1 ; 1c) selon l'une quelconque des revendications précédentes :

les informations de véhicule obtenues par l'unité d'obtention d'informations (4) comprenant en outre une caractéristique du véhicule (V) autre que les dimensions du véhicule (V) ;
l'unité de capteur (2) étant conçue pour reconnaître la caractéristique du véhicule (V) ;
le dispositif (1 ; 1c) comprenant en outre une unité de contrôle (8), conçue pour vérifier la caractéristique du véhicule (V) comprise dans les informations de véhicule basé sur la caractéristique du véhicule (V) reconnue par l'unité de capteur (2) ;

si la vérification de la caractéristique du véhicule (V) est positive, l'unité de contrôle (8) est en outre conçue pour confirmer la marque d'identification du véhicule (V) reconnue ; et

si la vérification de la caractéristique du véhicule (V) est négative, l'unité de contrôle (8) est en outre conçue pour rejeter la marque d'identification du véhicule (V) reconnue et pour commander à l'unité de reconnaissance (3) de reconnaître une nouvelle marque d'identification du véhicule (5).

5. Système d'aide à la conduite (DAS) comprenant un dispositif (1 ; la ; 1b ; 1c) pour déterminer une distance (D) à un véhicule (V) selon l'une quelconque des revendications 1 à 4.

6. Véhicule (EV) comprenant un dispositif (1 ; la ; 1b ; 1c) pour déterminer une distance (D) à un véhicule voisin (V) selon l'une quelconque des revendications 1 à 4.

7. Procédé pour déterminer une distance (D) d'un dispositif (1 ; la ; 1b ; 1c) à un véhicule (V), comprenant les étapes :

capturer (S1) une image de caméra (CI) du véhicule (V) par une unité de capteur (2) comprise dans le véhicule (1 ; 1a ; 1b ; 1c) ;

reconnaître (S2) une marque d'identification du véhicule (V) ;

obtenir (S3) des informations de véhicule sur le véhicule (V) d'une base de données, basé sur la marque d'identification du véhicule (V) reconnue, les informations de véhicule comprenant une dimension du véhicule (V) ; et

déterminer (S4) une distance actuelle (D) au véhicule (V), basé sur les dimensions du véhicule (V) comprises dans les informations de véhicule et sur les dimensions de l'image de véhicule du véhicule (V) dans l'image de caméra capturée (CI), la base de données (DB) étant stockée dans une mémoire (6) ; et

une interface distante (7) recevant et stockant au moins un sous-ensemble de la base de données (DB) d'un serveur (S) via la connexion à distance (RC1), et l'interface distante (7) envoyant des coordonnées GPS du dispositif (1 ; a ; 1b ; 1c) au serveur (S) via la connexion à distance (RC1), et le sous-ensemble de la base de données dépendant des coordonnées GPS du dispositif (1 ; 1a ; 1b ; 1c).

8. Procédé selon la revendication 7, la marque d'identification étant donnée par un numéro de plaque d'immatriculation du véhicule (V).

9. Procédé selon la revendication 7 ou 8, la marque d'identification du véhicule (V) étant reconnue sur la base de l'image de caméra (CI).

10. Procédé selon l'une quelconque des revendications 7 à 9, la marque d'identification du véhicule (V) étant obtenue du véhicule (V) via une connexion à distance (RC2).

11. Procédé selon l'une quelconque des revendications 7 à 10, les informations de véhicule comprenant en outre une caractéristique du véhicule (V) autre que les dimensions du véhicule (V), le procédé comprenant en outre les étapes suivantes :

reconnaître la caractéristique du véhicule (V) ; et

vérifier la caractéristique du véhicule (V) comprise dans les informations de véhicule basé sur la caractéristique du véhicule (V) reconnue ;

si la vérification de la caractéristique du véhicule (V) est positive, la marque d'identification du véhicule (V) reconnue étant confirmée ; et

si la vérification de la caractéristique du véhicule (V) est négative, la marque d'identification du véhicule (V) reconnue étant rejetée et une nouvelle marque d'identification du véhicule (V) étant reconnue.

12. Procédé selon l'une quelconque des revendications 7 à 11, une distance de comparaison étant déterminée basé sur une taille de plaque d'immatriculation standard obtenue par la base de données (DB) et sur une taille d'image de plaque d'immatriculation (LP) dans l'image de caméra capturée (CI), et la distance actuelle déterminée (D) étant confirmée basé sur la distance de comparaison.

Fig. 1

Fig. 2

Fig. 3

Fig. 4

**Fig. 5**

**Fig. 6**

DAS

1

**Fig.7**

EV

1

**Fig. 8**

S1

S2

S3

S4

**Fig. 9**

**EP 3 273 408 B1**

## REFERENCES CITED IN THE DESCRIPTION

### Patent documents cited in the description

- US 5266955 A

- EP 3035315 A1